Europäisches Patentamt

European Patent Office

Office européen des brevets

(19)

(11) Publication number: **0 151 909 B1**

(12) **EUROPEAN PATENT SPECIFICATION**

(45) Date of publication of patent specification: **22.04.92**  (51) Int. Cl.⁵: **G02B 6/16**

(21) Application number: **84850398.3**

(22) Date of filing: **20.12.84**

(54) **Optical fibre.**

(30) Priority: **23.12.83 SE 8307140**

(43) Date of publication of application:
**21.08.85 Bulletin 85/34**

(45) Publication of the grant of the patent:
**22.04.92 Bulletin 92/17**

(84) Designated Contracting States:
**AT BE CH DE FR GB IT LI NL SE**

(56) References cited:
**DE-A- 2 442 859**
**DE-A- 2 926 977**
**DE-A- 3 120 599**
**DE-A- 3 126 217**
**DE-A- 3 225 453**

**PATENT ABSTRACTS OF JAPAN, vol. 3, no. 30 (E-97), 13th March 1979, page 95 E97; & JP - A - 54 8542**

(73) Proprietor: **Permanova Lasersystem AB**
**Fagerbacken 28**
**S-831 46 Östersund(SE)**

(72) Inventor: **Vilhelmsson, Kennet**
**Daltorpsgatan 47B**
**S-412 73 Göteborg(SE)**

(74) Representative: **Roth, Ernst Adolf Michael et al**
**GÖTEBORGS PATENTBYRA AB Box 5005**
**S-402 21 Göteborg(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

# Description

The present invention refers to an optical fiber for transmitting high optical power and of the kind comprising a central portion, the core, adapted to conduct radiation, and a layer, the cladding, surrounding the core and at least one additional cover surrounding the cladding and adapted to improve the mechanical stability of the fiber and to attenuate scattered radiation.

The propagation of optical radiation in a material and the reflection of radiation at an interfacial surface between materials are described by the refractive index of the materials. The refractive index consists of a real part n and an imaginary part k. If the real refractive index differs significantly between two materials, there will be a considerable amount of reflected light at the interfacial surface between the materials.

The imaginary part, k, of the refractive index describes the absorption in the material, so that a large value of k gives rise to strong absorption in the material.

For materials having a low attenuation (a negligible k) a total reflection can be obtained at an interface between two materials, provided that the material in which the radiation propagates has a higher real refractive index n than the material from which the radiation is reflected. A condition for this to happen is that the angle of incidence measured between the direction of propagation of the incident light and the normal vector of the reflecting surface is sufficiently large. At interfacial surfaces where the refractive index is not abruptly changed, but is rather changed gradually from a high to a low level over a certain distance, the radiation will bend at the interfacial surface. Also in this case a total reflection can be obtained at the interfacial surface.

In an optical fiber total reflection is used to keep the radiation confined to the core of the fibre. A condition for this to occur is that the refractive index of the core $n_1$ is chosen somewhat higher than that of the cladding $n_2$, $n_1 > n_2$, or that the core has a varying refractive index with a maximum in its central part.

When a focused light beam enters the fiber part of the radiation will always leak out into the cladding. Further, there will always be a leakage of radiation along the entire length of the fiber, caused by different types of inhomogenities in the core material. This leak radiation is always detrimental to the transmission of information. Measures should therefore be taken to avoid that this leak radiation is conducted further along the fiber. This is done by applying a radiation absorbing covering on to the cladding, which is made of e.g. silicone rubber. Cf. also in this respect the cladding mode strippers, as for instance disclosed in DE-A-29 26 977, which are based on the same principle of the use of a radiation absorbing covering onto the cladding. Such coverings will absorb all stray light which by any reason reaches the cladding. If one, however, tries to use such a fiber for transmission of high optical power, e.g. laser radiation for materials processing, the radiation which has leaked out into the cladding will be absorbed in the covering and melt and/or ignite this.

Optical fibers for transmitting high optical powers have up to now been used only in the medical field. The light sources have mostly been argon ion lasers with output powers of some watts and continuosly radiating Nd-YAG-lasers of up to 100 W, where YAG denotes an optical crystal with the chemical composition $Y_3 Al_5 O_{12}$.

In certain cases the optical fibers have been designed in a special way in order to avoid damage to the end surface. It is for example known how to design the core with an increasing diameter at the ends, see e.g. US-A-3,843,865. The quality of the fibers today is however so high, that damage to the end surfaces is not a serious problem.

In cases where standard fibers have been employed, relatively large diameters, 0.6 mm, have been chosen in order to get all radiation enter into the core of the fiber, thereby minimizing the leak radiation. Using a large core fiber, however, implies a disadvantage in that the transmitted radiation cannot be focused as well as when a thinner fiber is used. The fiber will also be difficult to handle. For medical purposes a wide fiber is often not a disadvantage since the surfaces to be irradiated are mostly "large", of the size 1 mm in diameter.

In the DE-A-3225453 there is described an optical conductor for transmitting high optical power, which consists of a plurality of optical fibers surrounded on their whole length by a metallic net acting as a heat sink.

In the SE-B-406 816 there is described a light conductor with improved mechanical strength. According to one embodiment the light conductor comprises a fluid core surrounded by three different covering layers. The refractive index of the second covering layer is larger than that of the first (inner) covering layer. The second covering layer comprises a strongly light absorbing material. This light conductor can, however, not be used for transmission of high optical power, since the leak radiation would inevitably get absorbed by the strongly absorbing covering layer, which would therefore melt and/or ignite. The publication does not describe the problems associated with the transmission of high optical power. The object of this known light conductor is solely to provide an increase in the mechanical strength.

The DE-A- 2 442 859 describes a light conducting fiber provided with an optical filter, in the form of several dielectric layers, which selectively removes certain radiation. The filter layers have a thickness of the order of one light wavelength and are attached directly to the core of the fiber. These filter layers can thus be regarded as a substitute for the cladding of a conventional optical fiber. The layers are very sensitive to high optical power and the described light conducting fiber is not intended to transmit high optical power of the magnitude that is common in applications involving lasers for materials processing.

The object of the present invention is to provide an optical fiber of the kind mentioned above, which makes it possible to transmit high pulse powers, for example some 100 kW in pulses lasting some microseconds, 10 kW in pulses of some milliseconds duration and some hundred watts continuous wave. This has been achieved by the fact that in order to prevent that the degree of radiation in any volume part of the covering exceeds the limit at which the material of the covering is damaged the fiber is at least at its entrance side over a portion of its length devoid of the covering provided with a layer made of radiation resistant transmitting material arranged outside and in contact with the cladding and having a real refractive index larger than or close to the refractive index of the cladding, and that one or several additional material layers are arranged around the radiation resistant transmitting layer, of which the furthest out comprises a heat conducting means in order to carry away heat generated by absorption of radiation in any of said additional layers.

The invention will now be closer described with reference to an embodiment shown in the accompanying drawing, wherein:

Figure 1 is a schematic longitudinal cross-sectional view through a conventional optical fiber and

Figure 2 is a view similar to Figure 1 through an embodiment of the fiber according to the invention.

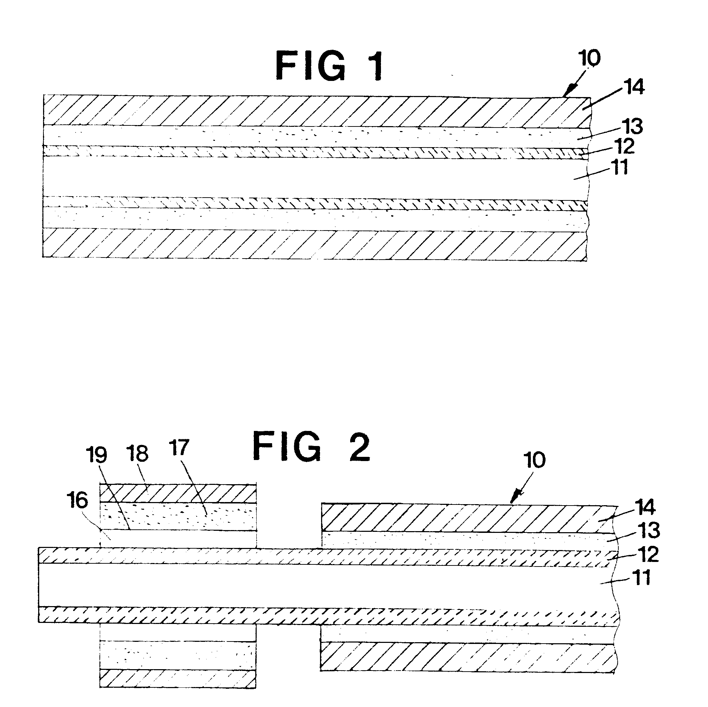

A conventional optical fiber 10 is principally constructed in a way which is schematically shown in Figure 1, namely with a core 11 made of a glass material, e.g. quartz, a cladding 12 of glass material or plastic, an inner radiation-attenuating covering 13 of for example silicone rubber and an outer covering 14 of e.g. nylon, which gives an improved mechanical strength to the fiber 10. When high optical power is transmitted through the fiber radiation leaks from the cladding into the radiation-attenuating layer and can cause irreversible damage to the fiber, as was previously mentioned.

To avoid that the absorbed power density in the sensitive inner and outer coverings 13,14 becomes to high said coverings are stripped off from the cladding 12 as is shown in Figure 2. A first layer 16 of a radiation resistant transmitting material is provided around and in direct contact with the cladding 12 on a portion of the fiber that is devoid of the coverings 13 and 14 at least at the entrance side of the fiber. The material in layer 16 should have a real refractive index exceeding or approximately equal to the refractive index of the cladding 12, so that the leak radiation which propagates in the cladding is coupled out into the layer 16.

The layer 16 is made of a radiation resistant transmitting material 16, which is intended to mean a material which is not destroyed by the radiation and will transmit the radiation. Examples of radiation resistant materials that may be used are glass materials and optic epoxy materials.

Since no absorption takes place in the radiation resistant material 16 absorption must occur in one or several additional layers 17,18 which are arranged around and in contact with the layer 16, of which the farthest out comprises a heat conducting and radiation absorbing layer 18.

In order to facilitate the coupling out of radiation from the radiation resistant transmitting layer 16 the outer surface 19 of layer 16, can be made uneven so as to scatter light incident on the surface, thereby diffusing the radiation, or alternatively inhomogenities causing light scattering can be introduced into the radiation resistant transmitting layer 16, or inhomogenities can be introduced in the layer 17 located outside the radiation resistant layer. The material of layer 17 should have a refractive index close to that of the radiation resistant material of layer 16 in order to diminish the light reflection from the interfacial surface between the two layers. A further way to couple out the radiation away from the radiation resistant material 16 is to apply a material 17 outside this which has absorption and a refractive index sufficiently close to that of the radiation resistant transmitting material.

In all cases when the radiation is absorbed in another layer than the farthest out layer 18, the layer in which the optical radiation is absorbed should be in good thermal contact with the heat conducting layer 18, which conducts produced heat away.

**Claims**

1. An optical fiber for transmitting high optical power and of the kind comprising a central portion, the core (11), adapted to conduct radiation, a layer, the cladding (12), surrounding the core, and at least one covering (13, 14) surrounding the cladding and adapted to give an improved mechanical stability to the fibre (10) and to attenuate scattered radiation,
**characterized in**
that in order to prevent that the radiation level in any volume part of the covering (13, 14) exceeds the limit at which the material of the covering is damaged the fiber is, at least at its entrance side over a portion of its length devoid of the covering (13, 14), provided with a layer (16) made of radiation resistant transmitting material arranged outside and in contact with the cladding (12) and having a real refractive index (n) larger than or close to the refractive index of the cladding (12), and that one or several additional material layers (17, 18) are arranged around the radiation resistant transmitting layer (16), of which the farthest out (18) comprises a heat-conducting means, in order to carry away heat generated by absorption of radiation in any of said additional material layers.

2. An optical fiber as claimed in claim 1, **characterized in**, that the radiation resistant material layer (16) has an outer surface (19) remote from the cladding (12) provided with inhomogenities of the order of one wavelength or more, so that radiation incident on to said outer surface can leak out through this.

3. An optical fiber as claimed in claim 1, **characterized in**, that a further material layer (17) having a refractive index close to that of the radiation resistant material layer and containing inhomogenities causing scattering of the radiation is arranged outside and in contact with the radiation resistant material layer (16).

4. An optical fiber as claimed in claim 1, **characterized in**, that the radiation resistant material layer (16) contains inhomogenities causing scattering of the radiation.

**Revendications**

1. Fibre optique destinée à transmettre une puissance optique élevée et du type comportant une partie centrale, le coeur (11), prévue pour conduire le rayonnement, une couche, la gaine (12), entourant le coeur, et au moins un revêtement (13, 14) entourant la gaine et prévu pour donner une stabilité mécanique améliorée à la fibre (10) et atténuer le rayonnement dispersé, caractérisée en ce que afin d'empêcher que le niveau de rayonnement dans une quelconque partie du volume du revêtement (13, 14) dépasse la limite au niveau de laquelle le matériau du revêtement est endommagé, la fibre est, au moins au niveau de son côté d'entrée sur une partie de sa longueur exempte de revêtement (13, 14), pourvue d'une couche (16) réalisée en matériau de transmission résistant au rayonnement disposé à l'extérieur et en contact avec la gaine (12) et ayant un indice de réfraction réel (n) plus grand que ou proche de l'indice de réfraction de la gaine (12), et en ce qu'une ou plusieurs couches de matériau additionnelles (17, 18) sont disposées autour de la couche de transmission résistant au rayonnement (16), dont la plus à l'extérieur (18) comporte des moyens conduisant la chaleur afin d'évacuer la chaleur générée par absorption de rayonnement dans n'importe laquelle desdites couches de matériau additionnelles.

2. Fibre optique selon la revendication 1, caractérisée en ce que la couche de matériau résistant au rayonnement (16) possède une surface extérieure (19) éloignée de la gaine (12) pourvue de défauts d'homogénéités de l'ordre d'une longueur d'onde ou plus, de sorte que le rayonnement incident sur ladite surface extérieure peut s'échapper par celle-ci.

3. Fibre optique selon la revendication 1, caractérisée en ce que une autre couche de matériau (17) ayant un indice de réfraction proche de celui de la couche de matériau résistant au rayonnement et contenant des défauts d'homogénéités provoquant la dispersion du rayonnement est disposée à l'extérieur de et en contact avec la couche de matériau résistant au rayonnement (16).

4. Fibre optique selon la revendication 1, caractérisée en ce que la couche de matériau résistant au rayonnement (16) contient des défauts d'homogénéités provoquant la dispersion du rayonnement.

**Patentansprüche**

1. Eine optische Faser zum Übertragen hoher optischer Leistung, welche einen zentralen Teil, den Kern (11), der dazu vorgesehen ist, Strahlung zu leiten, eine Schicht, die Umhüllung (12), die den Kern umgibt, und wenigstens eine Abdeckung (13, 14), die die Umhüllung umgibt und dazu vorgesehen ist, eine verbesserte mechanische Stabilität der Faser (10) zu gewährleisten und gestreute Strahlung zu schwächen, umfaßt, **dadurch gekennzeichnet**, daß, um zu verhindern, daß das Strahlungsniveau in irgendeinem Volumenteil der Abdeckung (13, 14) die Grenzen, bei welcher das Material der Abdeckung beschädigt wird, überschreitet, die Faser, an wenigstens ihrer Eingangsseite über einen Abschnitt ihrer Länge, der frei von der Abdeckung (13, 14) ist, mit einer Schicht (16) versehen ist, welche aus einem strahlungsresistenten, übertragenden Material hergestellt und an der Außenseite und in Kontakt mit der Umhüllung (12) angeordnet ist und einen realen Brechungsindex (n) aufweist, welcher größer als der oder nahekommend an den Brechungsindex der Umhüllung (12) ist, und daß eine oder mehrere zusätzliche Materialschichten (17, 18) um die strahlungsresistente, übertragende Schicht (16) herum angeordnet sind, wovon die äußerste (18) eine wärmeleitende Einrichtung umfaßt, um Wärme, die durch Absorption von Strahlung in irgendeiner der zusätzlichen Materialschichten erzeugt wird, abzuführen.

2. Eine optische Faser nach Anspruch 1, **dadurch gekennzeichnet**, daß die strahlungsresistente Materialschicht eine äußere, von der Umhüllung (12) abgewandte Oberfläche (19) aufweist, die mit Inhomogenitäten in der Größenordnung einer oder mehrerer Wellenlängen versehen ist, so daß auf die äußere Oberfläche auffallende Strahlung durch diese hindurch austreten kann.

3. Eine optische Faser nach Anspruch 1, **dadurch gekennzeichnet**, daß eine weitere Materialschicht (17) mit einem Brechungsindex, der demjenigen der strahlungsresistenten Materialschicht nahekommt, und welche Inhomogenitäten enthält, welche eine Streuung der Strahlung bewirken, außenseitig und in Kontakt mit der strahlungsresistenten Materialschicht (16) angeordnet ist.

4. Eine optische Faser nach Anspruch 1, **dadurch gekennzeichnet**, daß die strahlungsresistente Materialschicht (16) Inhomogenitäten enthält, welche eine Streuung der Strahlung bewirken.

# FIG 1

# FIG 2